# FASCICULE DE BREVET EUROPEEN

(11) **EP 1 118 751 B1**
(45) Date de publication et mention de la délivrance du brevet: **23.03.2005**
(21) Numéro de dépôt: 01400143.2
(22) Date de dépôt: 18.01.2001
(51) Int. Cl.: F01N 9/00, F01N 3/023

(54) **Système d'aide à la régénération d'un filtre à particules intégré dans une ligne d'échappement d'un moteur diesel de véhicule automobile**
Regenerationanlage für einen Partikelfilter einer Dieselbrennkraftmaschine für ein Fahrzeug
Regeneration system for an exhaust gas particulate filter of a diesel engine for a vehicle

(30) Priorité: 20.01.2000 FR 0000715
(43) Date de publication de la demande: 25.07.2001
(73) Titulaire: Peugeot Citroen Automobiles SA, 92200 Neuilly sur Seine (FR)
(72) Inventeur: Salvat, Olivier, 75010 Paris (FR); Le Tallec, Patrice, 78500 Sartrouville (FR)
(74) Mandataire: Habasque, Etienne Joel Jean-François

(56) Documents cités:
- DE-A- 3 909 932
- DE-A- 4 234 841
- LANGKABEL G I: "LA PLUS GRANDE INVENTION DEPUIS LE MOTEUR DIESEL" REVUE AUTOMOBILE,CH,HALLWAG S.A. BERNE, vol. 94, no. 19, 6 mai 1999 (1999-05-06), page 21 XP000825692 ISSN: 0035-0761
- PATENT ABSTRACTS OF JAPAN vol. 008, no. 112 (M-298), 25 mai 1984 (1984-05-25) & JP 59 020511 A (TOYO KOGYO KK), 2 février 1984 (1984-02-02)

## Description

La présente invention concerne un système d'aide à la régénération d'un filtre à particules intégré dans une ligne d'échappement d'un moteur Diesel de véhicule automobile.

On sait que la réduction des émissions polluantes liées au fonctionnement des moteurs des véhicules automobiles et en particulier des moteurs Diesel est un souci permanent des constructeurs.

Différents systèmes ont déjà été développés dans l'état de la technique pour réduire le niveau de ces émissions polluantes en particulier en utilisant un filtre à particules intégré dans la ligne d'échappement.

On pourra par exemple se reporter au document LANGKABEL G.I: LA PLUS GRANDE INVENTION DEPUIS LE MOTEUR DIESEL, REVUE AUTOMOBILE, CH, HALLWAG S.A. BERNE, volume 94, n° 19, 6 mai 1999 (1999-05-06), page 21, qui décrit un système conforme au préambule de la revendication 1.

Cependant, la gestion du fonctionnement de celui-ci et en particulier la gestion de sa régénération génère encore des difficultés.

Le but de l'invention est donc de les résoudre.

A cet effet, l'invention a pour objet un système d'aide à la régénération d'un filtre à particules intégré dans une ligne d'échappement d'un moteur Diesel de véhicule automobile, comportant différents organes associés au moteur, parmi lesquels :
- des moyens d'admission d'air dans le moteur,
- des moyens de recyclage de gaz d'échappement du moteur en entrée de celui-ci,
- un turbocompresseur,
- un catalyseur d'oxydation disposé en amont du filtre à particules dans la ligne d'échappement ;
- un système d'alimentation commune en carburant des cylindres du moteur, comportant des injecteurs à commande électrique, associés à ces cylindres,
- des moyens d'ajout au carburant d'un additif destiné à se déposer sur le filtre à particules pour abaisser la température de combustion des particules piégées dans celui-ci,
- des moyens d'acquisition d'informations relatives à différents paramètres de fonctionnement du moteur et des organes associés à celui-ci, caractérisé en ce qu'il comporte des moyens de contrôle du fonctionnement des moyens d'admission, des moyens de recyclage, du turbocompresseur et/ou du système d'alimentation pour piloter le fonctionnement du moteur, ces moyens étant en outre adaptés pour déclencher une phase de régénération du filtre à particules par combustion des particules piégées dans celui-ci en enclenchant une phase d'injections multiples de carburant dans les cylindres du moteur pendant leur phase de détente, et en ce que les moyens de contrôle sont adaptés pour déclencher une fermeture des moyens de recyclage des gaz d'échappement en entrée du moteur lors d'une phase de régénération du filtre à particules pour permettre un contrôle de la composition des gaz en entrée du filtre à particules et un fonctionnement à isocouple du moteur.

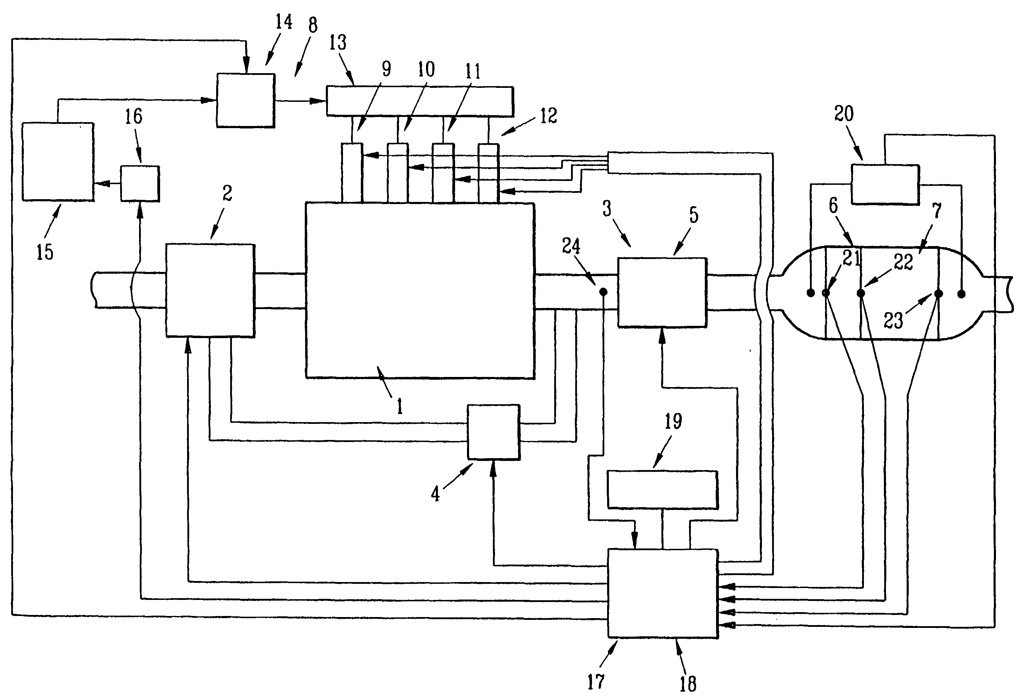

L'invention sera mieux comprise à la lecture de la description qui va suivre, donnée uniquement à titre d'exemple et faite en se référant au dessin annexé qui représente un schéma synoptique illustrant un moteur Diesel de véhicule automobile, et les différents organes associés à celui-ci.

On a en effet représenté sur cette figure, un moteur Diesel de véhicule automobile qui est désigné par la référence générale 1.

Ce moteur Diesel est associé à des moyens d'admission d'air en entrée de celui-ci, qui sont désignés par la référence générale 2.

En sortie, ce moteur est associé à une ligne d'échappement qui est désignée par la référence générale 3.

Des moyens de recyclage de gaz d'échappement du moteur en entrée de celui-ci sont également prévus et sont désignés par la référence générale 4.

Ces moyens sont alors interposés par exemple entre la sortie du moteur et les moyens 2 d'admission d'air dans celui-ci.

La ligne d'échappement peut également être associée à un turbocompresseur désigné par la référence générale 5 et plus particulièrement à la portion de turbine de celui-ci, de façon classique.

Enfin, la ligne d'échappement comporte un catalyseur d'oxydation désigné par la référence générale 6, disposé en amont d'un filtre à particules désigné par la référence générale 7, dans la ligne d 'échappement.

Le moteur est également associé à un système d'alimentation commune en carburant des cylindres de celui-ci. Ce système est désigné par la référence générale 8 sur cette figure et comporte par exemple des injecteurs à commande électrique associés à ces cylindres.

Dans l'exemple de réalisation représenté, le moteur est un moteur à quatre cylindres et comporte donc quatre injecteurs à commande électrique, respectivement 9,10,11 et 12.

Ces différents injecteurs sont associés à une rampe d'alimentation commune en carburant désignée par la référence générale 13 et reliée à des moyens d'alimentation en carburant désignés par la référence générale 14, comprenant par exemple une pompe à haute pression.

Ces moyens d'alimentation sont reliés à un réservoir de carburant désigné par la référence générale 15 et à des moyens d'ajout à ce carburant d'un additif destiné à se déposer sur le filtre à particules pour abaisser la température de combustion des particules piégées dans celui-ci.

En fait, cet additif peut par exemple être contenu dans un réservoir auxiliaire désigné par la référence générale 16 associé au réservoir de carburant 15, pour permettre l'injection d'une certaine quantité de cet additif dans le carburant.

Enfin, ce moteur et les différents organes qui viennent d'être décrits sont également associés à des moyens de contrôle de leur fonctionnement désignés par la référence générale 17 sur cette figure, comprenant par exemple tout calculateur approprié 18 associé à des moyens de stockage d'informations 19, et raccordé en entrée à différents moyens d'acquisition d'informations relatives à différents paramètres de fonctionnement de ce moteur et de ces organes, ce calculateur étant alors adapté pour contrôler le fonctionnement des moyens d'admission, des moyens de recyclage, du turbocompresseur et/ou du système d'alimentation pour piloter le fonctionnement du moteur et notamment le couple engendré par celui-ci en fonction des conditions de roulage du véhicule de façon classique.

C'est ainsi par exemple que ce calculateur est relié à un capteur de pression différentielle 20 aux bornes du catalyseur et du filtre à particules, respectivement 6 et 7, à des capteurs de température 21,22 et 23, respectivement en amont du catalyseur, entre ce catalyseur et le filtre à particules et en aval de ce filtre à particules dans la ligne d'échappement.

Le calculateur peut également recevoir une information de teneur en oxygène des gaz d'échappement à partir d'une sonde Lambda λ désignée par la référence générale 24 sur cette figure, intégrée dans la ligne d'échappement.

En sortie, ce calculateur est adapté pour piloter les moyens d'admission d'air, les moyens de recyclage de gaz d'échappement, le turbocompresseur, les moyens d'ajout au carburant de l'additif, les moyens d'alimentation en carburant de la rampe commune et les différents injecteurs associés aux cylindres du moteur.

En particulier, ce calculateur est adapté pour déclencher une phase de régénération du filtre à particules par combustion des particules piégées dans celui-ci en enclenchant une phase d'injections multiples de carburant dans les cylindres du moteur pendant leur phase de détente.

Les particules émises par le moteur au cours de son fonctionnement sont en effet piégées dans le filtre à particules. Il convient alors de régénérer celui-ci régulièrement par combustion de ces particules.

Lors de la phase de régénération du filtre à particules 7, les moyens de contrôle 17 sont adaptés pour piloter une fermeture des moyens 4 de recyclage des gaz d'échappement du moteur en entrée de celui-ci, ce qui permet de contrôler la composition des gaz en entrée du filtre à particules et un fonctionnement à isocouple du moteur.

Ces moyens de recyclage peuvent comporter une électrovanne à ouverture/fermeture.

Ceci permet de conserver l'agrément de conduite du véhicule.

## Revendications

1. Système d'aide à la régénération d'un filtre à particules intégré dans une ligne d'échappement d'un moteur Diesel de véhicule automobile, comportant différents organes associés au moteur, parmi lesquels :
- des moyens (2) d'admission d'air dans le moteur,
- des moyens (4) de recyclage de gaz d'échappement du moteur en entrée de celui-ci,
- un turbocompresseur (5),
- un catalyseur d'oxydation (6) disposé en amont du filtre à particules (7) dans la ligne d'échappement ;
- un système (8) d'alimentation commune en carburant des cylindres du moteur, comportant des injecteurs à commande électrique (9,10,11,12), associés à ces cylindres,
- des moyens (16) d'ajout au carburant d'un additif destiné à se déposer sur le filtre à particules (7) pour abaisser la température de combustion des particules piégées dans celui-ci,
- des moyens (20,21,22,23,24) d'acquisition d'informations relatives à différents paramètres de fonctionnement du moteur et des organes associés à celui-ci, **caractérisé en ce qu'**il comporte des moyens (17) de contrôle du fonctionnement des moyens (2) d'admission, des moyens (4) de recyclage, du turbocompresseur (5) et/ou du système (8) d'alimentation pour piloter le fonctionnement du moteurs moyens étant outre adaptés pour déclencher une phase de régénération du filtre à particules (7) par combustion des particules piégées dans celui-ci en enclenchant une phase d'injections multiples de carburant dans les cylindres du moteur pendant leur phase de détente, et **en ce que** ces moyens de contrôle (17) sont adaptés pour déclencher une fermeture des moyens (4) de recyclage des gaz d'échappement en entrée du moteur lors d'une phase de régénération du filtre à particules (7), pour permettre un contrôle de la composition des gaz en entrée du filtre à particules et un fonctionnement à isocouple du moteur.

2. Système selon la revendication 1, **caractérisé en ce que** les moyens de recyclage (4) comprennent une électrovanne à ouverture/fermeture.

## Patentansprüche

1. System zur Unterstützung der Regeneration eines Partikelfilters, der in eine Abgasleitung eines Dieselmotors für Kraftfahrzeuge integriert ist, mit verschiedenen zu dem Motor zugehörigen Einrichtungen, unter anderem:
- einer Einrichtung (2) zum Einlaß von Luft in den Motor,
- einer Einrichtung (4) zur Rückführung von Abgas des Motors zum Einlaß desselben.
- einem Turbolader (5),
- einem Oxidationskatalysator (6), der in der Abgasleitung stromaufwärts des Partikelfilters (7) angeordnet ist,
- einem System (8) zur gemeinsamen Kraftstoffversorgung der Zylinder des Motors, mit elektrisch gesteuerten Injektoren (9, 10. 11, 12,), die den Zylindern zugeordnet sind,
- einer Einrichtung (16) zur Zugabe eines Additifs, das dazu bestimmt ist. sich auf dem Partikelfilter (7) abzusetzen, um die Verbrennungstemperatur der darin eingefangenen Partikel zu senken, zu dem Kraftstoff,
- einer Einrichtung (20, 21, 22, 23, 24) zum Sammeln von Informationen über verschiedene Betriebsparameter des Motors und der ihm zugehörigen Einrichtungen, **dadurch gekennzeichnet, daß** es eine Steuereinrichtung (17) zur Steuerung des Betriebs der Einlaßeinrichtung (2), der Rückführungseinrichtung (4), des Turboladers (5) und/oder des Versorgungssystems (8) aufweist, um den Betrieb des Motors zu führen, wobei diese Einrichtung u.a. dazu ausgebildet ist, eine Phase der Regeneration des Partikelfilters (7) durch Verbrennung der darin eingefangenen Partikel auszulösen, durch Auslösung einer Phase von Mehrfachinjektionen von Kraftstoff in die Zylinder des Motors während ihres Entspannungstaktes, und daß die Steuereinrichtung (17) dazu ausgebildet ist, ein Schließen der Abgas-Rückführungseinrichtung (4) am Einlaß des Motors während einer Regenerationsphase des Partikelfilters (7) zu bewirken, um eine Steuerung der Abgaszusammensetzung am Eingang des Partikelfilters und einen Betrieb des Motors mit gleichbleibendem Drehmoment zu ermöglichen.

2. System nach Anspruch 1, **dadurch gekennzeichnet, daß** die Abgas-Rückführungseinrichtung (4) ein elektrisches Öffnungs/Schließ-Ventil aufweist.

## Claims

1. Regeneration support system for a particulate filter integrated in an exhaust tract of a diesel engine for a motor vehicle, comprising various elements which are associated with the engine, including:
- means (2) for introducing air into the engine,
- means (4) for recycling exhaust gases from the engine at the inlet thereof,
- a turbocharger (5),
- an oxidation catalyst (6) which is arranged upstream of the particulate filter (7) in the exhaust tract,
- a common fuel supply system (8) for the engine cylinders, comprising electrically controlled injectors (9, 10, 11, 12) which are associated with these cylinders,
- means (16) for adding to the fuel an additive which is intended to be deposited on the particulate filter (7) in order to lower the combustion temperature of the particulates which are trapped therein,
- means (20, 21, 22, 23, 24) for the acquisition of information relating to various operating parameters of the engine and the elements associated therewith, **characterised in that** it comprises means (17) for controlling the operation of the introduction means (2), the recycling means (4), the turbocharger (5) and/or the supply system (8) in order to control the operation of the engine, these means further being suitable for bringing about a regeneration phase of the particulate filter (7) by means of combustion of the particulates which are trapped therein by triggering a phase of multiple injections of fuel into the engine cylinders during the rest phase thereof, and **in that** these control means (17) are suitable for bringing about a closure of the means (4) for recycling the exhaust gases at the inlet of the engine during a regeneration phase of the particulate filter (7) in order to allow the composition of the gases at the inlet of the particulate filter to be controlled and the engine to be operated with isocoupling.

2. System according to claim 1, **characterised in that** the recycling means (4) comprise an opening/closing solenoid valve.
